# EUROPEAN PATENT SPECIFICATION

(11) **EP 3 981 253 B1**
(45) Date of publication and mention of the grant of the patent: **12.07.2023**
(21) Application number: 21201248.8
(22) Date of filing: 06.10.2021
(51) Int. Cl.: A22C 15/00, B65H 45/20, B65D 65/12, B65D 67/00

(54) **COVER FOR COVERING PRODUCTS ON A HANDLING SUPPORT**
ABDECKUNG ZUM ABDECKEN VON PRODUKTEN AUF EINEM HANDHABUNGSTRÄGER
HOUSSE POUR RECOUVRIR LES PRODUITS SUR UN SUPPORT DE MANUTENTION

(30) Priority: 06.10.2020 NL 2026634
(43) Date of publication of application: 13.04.2022
(73) Proprietor: Serendipity B.V., 7006 RW Doetinchem (NL)
(72) Inventor: Leuver, Frank Christiaan, 7006 RW Doetinchem (NL)
(74) Representative: Patent Business B.V.

(56) References cited:
- CH-A- 512 882
- FR-A- 81 446
- FR-A- 1 139 974
- GB-A- 2 294 443
- NL-B1- 2 016 348

## Description

### Field of the invention

The present invention relates to a cover for covering products on a handling support, notably for a system for conveying objects continuously, from one processing station to another, used in various automated production lines comprising a continuous overhead conveyor provided with load attachment hooks, particularly in the food industry where this support is appropriate for conveying meat cuts.

### Background of the invention

Supports as such are known for such applications for suspending pieces of meat, as described in for instance the Dutch Patent No. 191771, in EP2443931 and in EP3064068.

FR1139974 in its introduction states: "the current invention has as its object a protective cover for use in particular, but not exclusively, covering automobiles or others". It only relates to big, bulky objects ('Ces articles sont d'un prix élevé lourds et très encombrants. `).

A problem when transporting products on such supports, for instance during production or transport, is that physical access to the product is unrestricted. Thus, dust and dirt may tarnish or soil the products.

### Summary of the invention

It is an aspect of the invention to provide transportation on a handling support that is relatively clean, easy and cheap to produce, and easy to use, in particular in production environments.

There is provided a cover according to claim 1.

There is further provided a method according to claim 8.

There is further provided a method according to claim 9.

The cover provides an easy way of covering product on a support and prevents spoiling or contamination of the product when suspending on the handling support.

In particular, such a handling support is designed for handling meat portions or meat cuts. Often, these meat portions are more than several kilograms each. In particular, these meat portions can weigh more than 5 kg each. The handling support can handle several of these meat portions. In particular, the handling support can hold more than four meat portions.

A handling support may comprise attachment members for attaching for instance meat portions, or for instance skewers. The meat portions can be pressed onto ends of the skewers such that the skewers are inserted into the material to be hung up. Thus, no special provisions need to be made for suspending the material. In an embodiment, the meat portions may comprises small incisions that allow the meat portions to be easily attached onto a skewer. When the meat portions comprise relatively tender meat, they can also be attached to such a skewer easily. When meat portions as less tender, like for instance pork with skin, the skewers have pointed ends that allows meat portions to be skewed onto the skewers. Meat portions were often provided with loops of material, and these loops are hung onto hooks on supports for suspending the meat portions.

In an embodiment, each of said ends are folded or rolled to said center for providing a compact folded cover.

In an embodiment, the fold lines are functionally parallel.

In an embodiment, the sheet is a rectangular sheet having longitudinal sides substantially parallel to the fold lines.

In an embodiment, the cover comprises center fold lines at both sides of said center, thus defining a center band (16) between said center fold lines (14), said sheet at said center fold lines folded in the same direction, thus resulting in an unfolded center band.

In an embodiment, the sheet is a plastic foil, in particular LDPE, PET, or a biodegradable thermoplastic foil.

In an embodiment, the cover further comprises a layer of cellulose-based material, like paper, in an embodiment said layer is on at least one side coated or treated for obtaining a hydrophobic layer or surface.

In an embodiment of the method, in particular for a cover described above, the method comprises:
- providing a band of endless foil extending in a longitudinal direction defining a longitudinal direction (L), and having a band width;
- providing fold lines in said longitudinal direction (L);
- folding said band of endless foil into a string using said fold lines;
- applying on said string seals at an interspacing (S, S') for attaching surfaces of said sheet together, thus producing a series of said covers interconnected in said string and having parts attached together and preventing these covers from unfolding.

In an embodiment, the fold lines are provided mutually functionally parallel, in particular functionally parallel to said longitudinal direction (L).

In an embodiment, the parts are sealed for preventing unfolding, and cut while sealing or then cut for providing covers with ends.

In an embodiment, the covers are folded wherein said ends are folded towards said center and/or said ends are rolled towards said center.

In an embodiment, a spacing between a pair of center folds lines is provided at or about functionally a centres of said band of foil, and said foil is folded at said center fold lines in the same direction, thus providing a center band of unfolded foil.

In an embodiment, the center fold lines have a spacing which is larger than a spacing of said fold lines.

There is further provided a use of the cover for covering meat portions on a handling support.

The term "substantially" herein, like in "substantially consists", will be understood by and clear to a person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. The term "functionally" is intended to cover deviations in a feature to which it refers which are such that in the functional use of the feature in combination with other features it relates to in the invention, the combination of features is able to operate.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

An exemplary embodiment of production and used of a cover for a handling support will be described hereinbelow, with reference to the appended drawings, in which the drawings show:
Figure 1 a longitudinally extending sheet being provided with longitudinal folding lines;
Figure 2 a part of the sheet being folded into folded condition of folded state;
Figure 3 ends of a cover being welded at the ends;
Figure 4 the ends of the folded cover being rolled;
Figure 5 alternatively, ends of the folded cover being folded, and
Figure 6 the cover applied on a handling support, here carrying parts of meat.

### Description of embodiments

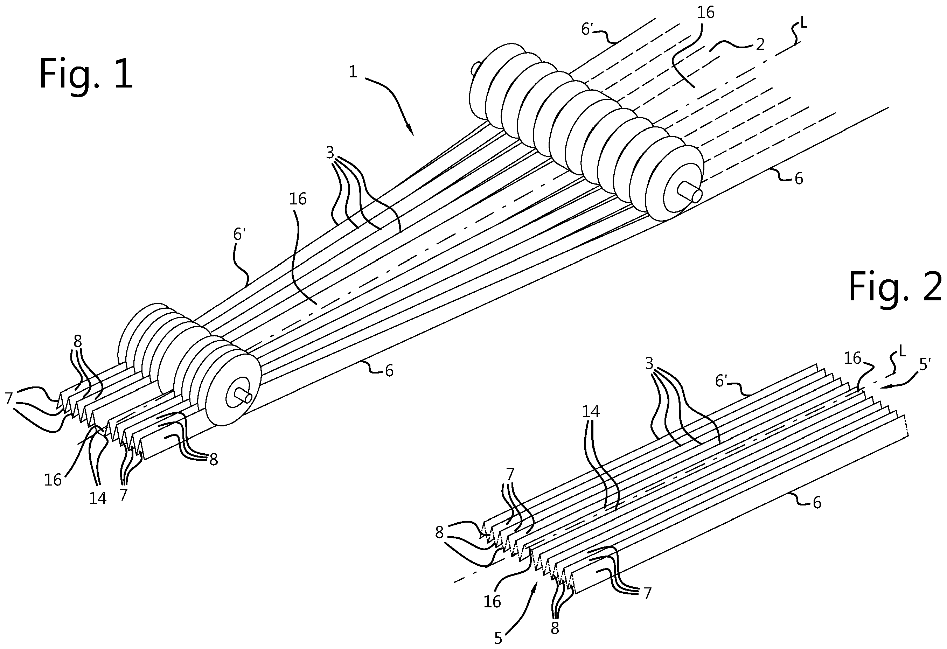

Figure 1 shows a first step in a production process for producing the covers 1. Here, a band of endless foil 2 is provided. Using rolls with tapered profile, fold lines 3 are made in the band of endless foil. Here, at opposite sides of a center band of the band of endless foil 2, center fold lines 14 are provided. Using additional rolls, the band of endless foil 2 is folded on said fold lines 3, 14, thus reducing the width of the band. At the center fold lines 14, here the band of endless foil is folded in the same direction. In this way, a center band is provided that remains unfolded, providing an unfolded center band 16.

Figure 2 shows a part of the band of endless foil almost completely folded.

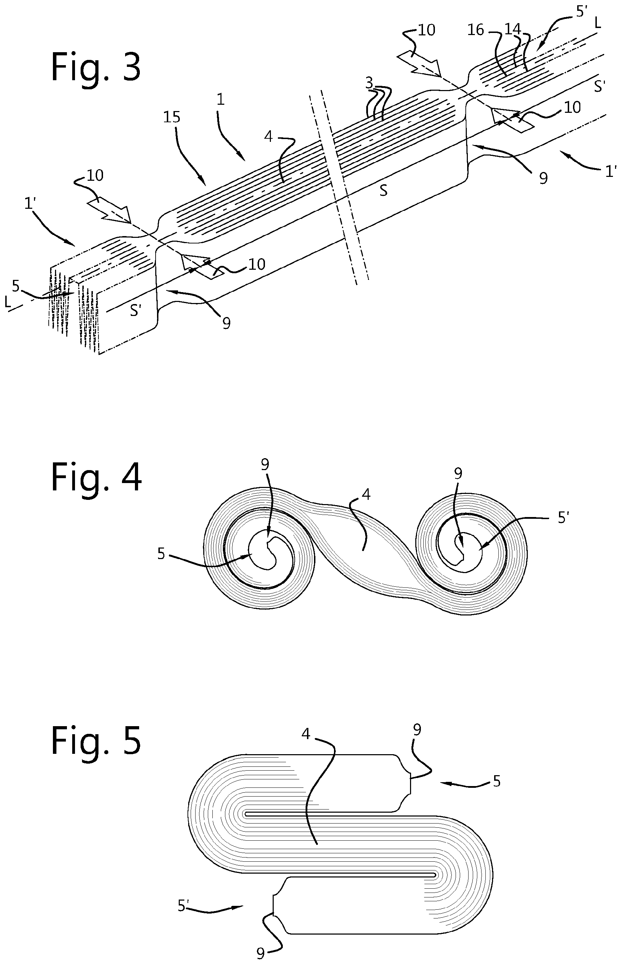

In figure 3, the endless band of foil 2 is completely folded together into a string 11 and at spacings S, S' the string 11 is pressed together at parts 9 and sealed 10. Often, het seals are used for melting at least surfaces 7, 8 (figure 1 and 2) and adhering these together. The string 11 of covers 1 is divided into covers 1 by cutting after sealing 10. Alternatively, the heat seal 10 is pressed together at such force that the string 11 is divided up into separate covers 1.

In figures 4 and 5, two different methods are illustrated to further compact the covers 1. In figure 4, ends 5, 5' of the cover are roller towards center 4 of sheet 2. In this way, the covers can be stored and presented for use in a compact way. In the center 4, a dent can be made that fits over an end or eye 20 of the handling support. This is not further indicated in the drawing.

In figure 5, the ends 5, 5'of a cover 1 are folded here in a zigzag way towards center 4. This folding can be once or more turns. A small amount, like a dot or a stripe, can be applied in order to keep that configuration until use, i.e., keep the ends 5, 5' as depicted. This again provides a compact cover 1.

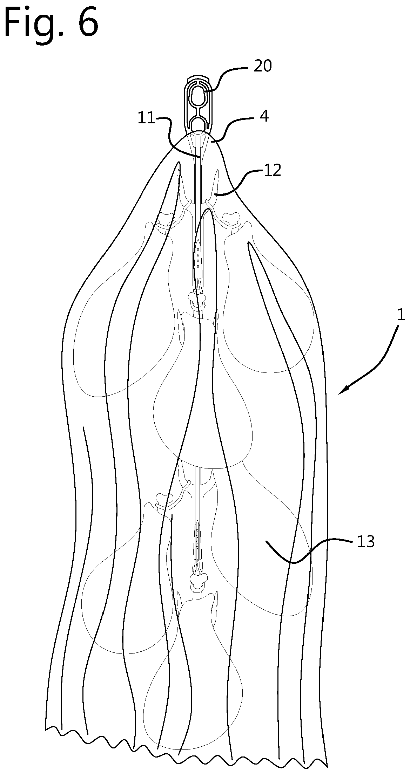

In figure 6, the cover 1 is draped over a handling support 11. Handling support 11 had attachment provisions for attaching products, here portions of meat 13 like for instance hams. The handling support can comprise for instance skewers 12 or hooks as attachment provisions. Examples of handling supports are disclosed in EP2443931B1 and NL2016348, for example. Handling supports 11 have a handling support end 20, often provided with a hook or eye 20. In the embodiment, the center 4 is provided with an opening to fit the handling support end 20 through. In another embodiment, discussed earlier in relation to figure 4, a dent fitting the handling supports' end 20.

A cover 1 is provided with its center 4 on the handling support end 20. In embodiments, a hole can be provided in the center 4 through which the handling support end 20 is provided. Alternatively, an indent is made in the center 4 where the foil is stretched. This bulged part can be fitted onto the handling support end 20. In this way, the cover remains closed.

Next, the ends 5, 5' are pulled down along the handling support 11 and along the product 13. In this way, a closed sleeve is provided around the product 13. This prevents spoiling or contamination the product while being suspended on the handling support 11. If desired, the lower end below and extending beyond the handling support 11 can be taken together and closed, further sealing the product for getting spoiled or contaminated.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

### Reference numbers

1 cover
1' subsequent/previous cover
2 sheet
3 fold line or crease
4 center
5, 5' cover end
6, 6' longitudinal sheet edges/ends
7 fold line
8 fold line
9 cover attached/sealed end
10 sealing/welding
11 Handling support
12 skewer/attachment means
14 fold lines flanking the center band
15 cover
16 unfolded center band
20 handling support end/eye
L longitudinal axis
S, S' repeating sections

## Claims

1. Cover (1) for covering product (13) on a handling support (11) for conveying the product (13), in particular meat portions (13), the cover (1) comprising a sheet (2) having a center (4) and fold lines (3) and that is provided in a folded state resulting in a folded sheet in which said sheet (2) is functionally zigzag folded about said fold lines (3), said folded sheet having ends (5, 5') at which surfaces of said zigzag folded sheet are attached together (9), **characterised in that** said center (4) is free from said fold lines (3) for positioning said center (4) on a handling support end (20).

2. Cover (1) according to claim 1, **characterized in that** each of said ends (5, 5') are folded or rolled to said center (4) for providing a compact folded cover (1).

3. Cover (1) according to claim 1 or 2, **characterized in that** said fold lines (3) are functionally parallel.

4. Cover (1) according to any one of the preceding claims, wherein said sheet (2) is a rectangular sheet having longitudinal sides substantially parallel to the fold lines (3).

5. Cover (1) according to any one of the preceding claims, wherein said cover (1) comprises center fold lines (14) at both sides of said center (4), thus defining a center band between said center fold lines (14), said sheet (2) at said center fold lines (14) folded in the same direction, thus resulting in an unfolded center band (16)

6. Cover (1) according to any one of the preceding claims, **characterized in that** said sheet (2) is a plastic foil, in particular LDPE, PET, or a biodegradable thermoplastic foil.

7. Cover (1) according to any one of the preceding claims, further comprising a layer of cellulose-based material, like paper, optionally said layer is on at least one side coated or treated for obtaining a hydrophobic layer or surface.

8. Method for handling meat portions on a handling support, comprising arranging the meat portions on said handling support, and providing the cover according to any one of the preceding claims on said handling support with said meat portions, said handling support comprising an attachment end, for instance an eye, said method comprising attaching said centre of said cover to said attachment end, and pulling said cover over the handling support and over said meat portions.

9. A method for producing a cover (1), in particular according to any one of the claims 1-7, comprising:
- providing a band of endless foil (2) extending in a longitudinal direction defining a longitudinal direction (L), and having a band width;
- providing fold lines (3) in said longitudinal direction (L);
- folding said band of endless foil (2) into a string using said fold lines (3):
- applying on said string seals (10) at an interspacing (S, S') for attaching surfaces of said sheet (2) together, thus producing a series of said covers (1) interconnected in said string (11) and having parts (9) attached together and preventing these covers (1) from unfolding,
wherein a spacing between a pair of center folds lines (12) is provided at or about functionally a centres of said band of foil, and said foil is folded at said center fold lines in the same direction, thus providing a center band (13) of unfolded foil.

10. The method of claim 9, wherein said fold lines (3) are provided mutually functionally parallel, in particular functionally parallel to said longitudinal direction (L)

11. The method of claim 9 or 10, wherein said parts (9) are sealed (10) for preventing unfolding, and cut while or after sealing for providing covers (1) with ends (5, 5').

12. The method of claim 11, wherein said covers (1) are folded wherein said ends (5, 5') are folded towards said center (4) and/or said ends (5, 5') are rolled towards said center (4).

13. The method of claim 12, wherein said center fold lines (14) have a spacing which is larger than a spacing of said fold lines (3).

14. Use of a cover (1) of any one of the claims 1-7 or of a cover resulting from the method of any one of the claims 9-13 for covering meat portions (13) on a handling support (11).

## Patentansprüche

1. Abdeckung (1) zum Abdecken eines Produktes (13) auf einem Transportträger (11) zum Transportieren des Produktes (13), insbesondere von Fleischportionen (13), wobei die Abdeckung (1) ein Blatt (2) umfasst, das eine Mitte (4) und Faltlinien (3) aufweist und das in einem gefalteten Zustand bereitgestellt wird, der zu einem gefalteten Blatt führt, in dem das Blatt (2) funktionell zickzackförmig um die Faltlinien (3) gefaltet ist,
wobei das gefaltete Blatt Enden (5, 5') aufweist an denen Oberflächen die zickzackförmig gefalteten Blattes miteinander verbunden sind (9), **dadurch gekennzeichnet**, das die Mitte (4) von den Faltlinien (3) frei ist um die Mitte (4) auf einem Transportträgerende (20) zu positionieren.

2. Abdeckung (1) nach Anspruch 1, **dadurch gekennzeichnet, dass** jedes der Enden (5, 5') zur Mitte (4) gefaltet oder gerollt ist, um eine kompakte gefaltete Abdeckung (1) zu schaffen.

3. Abdeckung (1) nach Anspruch 1 oder 2, **dadurch gekennzeichnet, dass** die Faltlinien (3) funktionell parallel zueinander sind.

4. Abdeckung (1) nach einem der vorhergehenden Ansprüche, wobei das Blatt (2) ein rechteckiges Blatt ist, dessen Längsseiten im wesentlichen parallel zu den Faltlinien (3) verlaufen.

5. Abdeckung (1) nach einem der vorhergehenden Ansprüche, wobei die Abdeckung (1) Mittelfalzlinien (14) an beiden Seiten der Mitte (4) aufweist, wodurch ein Mittelband zwischen den Mittelfalzlinien (14) definiert wird, wobei das Blatt (2) an den Mittelfalzlinien (14) in der gleichen Richtung gefaltet ist, wodurch ein ungefaltetes Mittelband (16) entsteht.

6. Abdeckung (1) nach einem der vorhergehenden Ansprüche, **dadurch gekennzeichnet, dass** das Blatt (2) eine Kunststofffolie, insbesondere LDPE, PET, oder eine biologisch abbaubare thermoplastische Folie ist.

7. Abdeckung (1) nach einem der vorhergehenden Ansprüche, die ferner eine Schicht aus einem Material auf Zellulosebasis, wie Papier, umfasst, wobei optional die Schicht auf mindestens einer Seite beschichtet oder behandelt ist, um eine hydrophobe Schicht oder Oberfläche zu erhalten.

8. Verfahren zur Behandlung von Fleischportionen auf einem Transportträger, umfassend das Anordnen der Fleischportionen auf dem Transportträger und das Anbringen der Abdeckung nach einem der vorhergehenden Ansprüche auf dem Transportträger mit den Fleischportionen, wobei der Transportträger ein Befestigungsende, beispielsweise eine Öse, umfasst, wobei das Verfahren das Anbringen der Mitte der Abdeckung an dem Befestigungsende und das Ziehen der Abdeckung über dem Transportträger und über die Fleischportionen umfasst.

9. Verfahren zur Herstellung einer Abdeckung (1), insbesondere nach einem der Ansprüche 1-7, umfassend:
- Bereitstellen eines Bandes aus Endlosfolie (2), das sich in einer Längsrichtung erstreckt, die eine Längsrichtung (L) definiert, und eine Bandbreite aufweist;
- Bereitstellen von Faltlinien (3) in der Längsrichtung (L);
- Falten des Bandes aus Endlosfolie (2) zu einer Schnur unter Verwendung der Falzlinien (3);
- Anbringen von Zuklebungen (10) auf der Schnur in einem Abstand (S, S'), um Oberflächen der Folie (2) aneinander zu befestigen, wodurch eine Reihe von Abdeckungen (1) erzeugt wird, die in der Schnur (11) miteinander verbunden sind und Teile (9) aufweisen, die aneinander befestigt sind und verhindern, dass sich diese Abdeckungen (1) entfalten,
wobei ein Abstand zwischen einem Paar von Mittelfalzlinien (12) an oder um die funktionelle Mitte des Folienbandes vorgesehen ist und die Folie an den Mittelfalzlinien in der gleichen Richtung gefaltet wird, wodurch ein Mittelband (13) aus ungefalteter Folie entsteht.

10. Verfahren nach Anspruch 9, wobei die Falzlinien (3) funktional parallel zu einander vorgesehen sind, insbesondere funktional parallel zur Längsrichtung (L).

11. Verfahren nach Anspruch 9 oder 10, wobei die Teile (9) versiegelt (10) werden, um ein Auffalten zu verhindern, und während oder nach Versieglung geschnitten werden, um Abdeckungen (1) mit Enden (5, 5') zu versehen.

12. Verfahren nach Anspruch 11, wobei die Abdeckungen (1) zur Mitte (4) hin gefaltet werden und/oder die Enden (5, 5') zur Mitte (4) hin gerollt werden.

13. Verfahren nach Anspruch 12, wobei die mittleren Faltlinien (14) einen Abstand aufweisen, der größer ist als ein Abstand der Faltlinien (3).

14. Verwendung einer Abdeckung (1) nach einem der Ansprüche 1-7 oder einer Abdeckung, die aus dem Verfahren nach einem der Ansprüche 9-13 resultiert, zum Abdecken von Fleischportionen (13) auf einem Transportträger (11).

## Revendications

1. Couverture (1) pour recouvrir un produit (13) sur un support de manutention (11) pour transporter le produit (13), en particulier des portions de viande (13), la couverture (1) comprenant une feuille (2) ayant un centre (4) et des lignes de pliage (3) et qui est fournie dans un état plié résultant en une feuille pliée dans laquelle ladite feuille (2) est fonctionnellement pliée en zigzag autour desdites lignes de pliage (3) ladite feuille pliée ayant des extrémités (5, 5') auxquelles les surfaces de ladite feuille pliée en zigzag sont attachées ensemble (9) **caractérisée en ce que** ledit centre (4) est laisser libre desdites lignes de pliage (3) pour positionner ledit centre (4) sur une extrémité du support de manutention (20).

2. Couverture (1) selon la revendication 1, **caractérisée en ce que** chacune des extrémités (5, 5') est pliée ou roulée vers ledit centre (4) pour fournir une couverture pliée compacte (1).

3. Couverture (1) selon la revendication 1 ou 2, **caractérisée par le fait que** les lignes de pliage (3) sont fonctionnellement parallèles.

4. Couverture (1) selon l'une quelconque des revendications précédentes, dans laquelle ladite feuille (2) est une feuille rectangulaire dont les côtés longitudinaux sont sensiblement parallèles aux lignes de pliage (3).

5. Couverture (1) selon l'une quelconque des revendications précédentes, dans laquelle ladite couverture (1) comprend des lignes de pliage centrales (14) de part et d'autre dudit centre (4), définissant ainsi une bande centrale entre lesdites lignes de pliage centrales (14), ladite feuille (2) au niveau desdites lignes de pliage centrales (14) étant pliée dans la même direction, résultant ainsi en une bande centrale dépliée (16).

6. Couverture (1) selon l'une quelconque des revendications précédentes, **caractérisé en ce que** ladite feuille (2) est une feuille plastique, en particulier LDPE, PET, ou une feuille thermoplastique biodégradable.

7. Couverture (1) selon l'une quelconque des revendications précédentes, comprenant en outre une couche de matériau à base de cellulose, comme le papier, dans un mode de réalisation, ladite couche est, sur au moins un côté, enduite ou traitée pour obtenir une couche ou une surface hydrophobe.

8. Procédé de manutention de portions de viande sur un support de manutention, comprenant la disposition des portions de viande sur ledit support de manutention, et la mise en place de la couverture selon l'une quelconque des revendications précédentes sur ledit support de manutention avec lesdites portions de viande, ledit support de manutention comprenant une extrémité de fixation, par exemple un oeil, ledit procédé comprenant la fixation du centre de ladite couverture à ladite extrémité de fixation, et la traction de ladite couverture sur le support de manutention et sur lesdites portions de viande.

9. Procédé de fabrication d'une couverture (1), en particulier selon l'une quelconque des revendications 1 à 7, comprenant :
- fournir une bande de feuille sans fin (2) s'étendant dans une direction longitudinale définissant une direction longitudinale (L), et ayant une largeur de bande ;
- en traçant des lignes de pliage (3) dans ladite direction longitudinale (L) ;
- plier ladite bande de feuille sans fin (2) en une corde en utilisant lesdites lignes de pliage (3) ;
- appliquer sur ladite corde des joints (10) à un espacement (S, S') pour attacher les surfaces de ladite feuille (2) ensemble, produisant ainsi une série de ces couvertures (1) interconnectées dans ladite corde (11) et ayant des parties (9) attachées ensemble et empêchant ces couvertures (1) de se déplier,
dans lequel un espacement entre une paire de lignes de pliage centrales (12) est prévu au niveau ou autour d'un centre fonctionnel de ladite bande de feuille, et ladite feuille est pliée au niveau desdites lignes de pliage centrales dans la même direction, fournissant ainsi une bande centrale (13) de feuille dépliée.

10. Procédé selon la revendication 9, dans lequel lesdites lignes de pliage (3) sont mutuellement parallèles sur le plan fonctionnel, en particulier parallèles sur le plan fonctionnel à la direction longitudinale (L).

11. Procédé de la revendication 9 ou 10, dans lequel lesdites parties (9) sont scellées (10) pour empêcher le déploiement, et coupées pendant le scellement ou ensuite pour fournir des couvercles (1) avec des extrémités (5, 5').

12. Méthode de la revendication 11, dans laquelle lesdites couvertures (1) sont pliées, lesdites extrémités (5, 5') étant pliées vers ledit centre (4) et/ou lesdites extrémités (5, 5') étant roulées vers ledit centre (4).

13. Procédé de la revendication 12, dans lequel les lignes de pliage centrales (14) ont un espacement supérieur à l'espacement des lignes de pliage (3).

14. Utilisation d'une housse (1) de l'une quelconque des revendications 1 à 7 ou d'une housse résultant du procédé de l'une quelconque des revendications 9 à 13 pour recouvrir des portions de viande (13) sur un support de manutention (11).
